# EUROPÄISCHE PATENTANMELDUNG

(11) **EP 0 891 008 A1**
(43) Veröffentlichungstag der Anmeldung: **13.01.1999**
(21) Anmeldenummer: 98111913.4
(22) Anmeldetag: 26.06.1998
(51) Int. Cl.: H01R 9/07, H02G 5/08, H02G 5/06

(54) **Energieverteilungssystem**

(30) Priorität: 09.07.1997 DE 19729411
(71) Anmelder: SIEMENS AKTIENGESELLSCHAFT, 80333 München (DE)
(72) Erfinder: Hussong, Wolfgang, Dipl.-Ing., 91080 Uttenreuth (DE)

(57) **Zusammenfassung**

Um bei einem Energieverteilungssystem (1) mit einer Sammelschiene und mit mindestens einem Abzweig zur Versorgung eines Verbrauchers (28) bei gleichzeitig geringem Projektierungsaufwand einen zeitsparenden Aufbau und einen einfachen Anschluß von Abzweigen zu ermöglichen, ist die Sammelschiene als Flachkabel (2) mit einer Anzahl von nebeneinander angeordneten Leitungsadern (4,5,6) zur Energie- und Datenübertragung ausgeführt. Außerdem ist der Abzweig als kommunikationsfähiger, aktiver Verbraucherabzweig (3) in ein Gehäuse (3a) integriert, das verbraucherspezifische Funktionalitäten (23,24) enthält und eine nach dem Prinzip der Durchdringungstechnik arbeitende Kontaktierungseinrichtung (15,17) aufweist.

## Beschreibung

Die Erfindung bezieht sich auf ein Energieverteilungssystem mit einer Sammelschiene und mit mindestens einem Abzweig zur Versorgung eines Verbrauchers.

Bei einem Energieverteilungssystem werden in der Regel einem einzelnen Abzweig zum jeweiligen Verbraucher elektrische Energie, eine Steuer- oder Hilfsspannung und Kommunikationsdaten oder -signale über separate Einzelleitungen zugeführt. Hierzu werden, insbesondere für die Kommunikationsdaten, üblicherweise separate Verteilerdosen eingesetzt. Dabei können die Abzweige über Rundkabel oder starre Sammelschienen mit Energie, Hilfsenergie und ggf. mit Steuer- oder Kommunikationsdaten versorgt werden. Auch ist es möglich, Anschlußleitungen zu einem einzelnen Abzweig oder zu mehreren Abzweigen zu führen und von dort ausgehend weitere Anschlußleitungen zu weiteren Abzweigen zu verlegen. Dabei sind in der Regel alle Anschlußknoten mit Klemmen ausgerüstet, so daß jede Einzelader der Anschlußleitung oder des Anschlußkabels abgeschnitten und abisoliert werden muß, bevor diese im jeweiligen Klemmraum einzeln angeklemmt werden kann.

Eine derartige Anlageninstallation ist daher äußerst zeitaufwendig und für Anwendungen, wie diese beispielsweise bei Abzweigen der Förder- und Anlagentechnik anzutreffen sind, ungeeignet. Hier wird in zunehmendem Maße eine übersichtliche Installation der Anlage gefordert, wobei der Projektierungsaufwand möglichst gering gehalten werden soll. Die bisher übliche Projektierung mit detaillierten Plänen und zugehörigen Verdrahtungslisten wird von den Anwendern als umständlich und kostenintensiv angesehen.

Der Erfindung liegt daher die Aufgabe zugrunde, ein Energieverteilungssystem anzugeben, das bei gleichzeitig geringem Projektierungsaufwand einen zeitsparenden Aufbau und einfachen Anschluß von Abzweigen ermöglicht.

Diese Aufgabe wird erfindungsgemäß gelöst durch die Merkmale des Anspruchs 1. Dazu umfaßt das Energieverteilungssystem eine Sammelschiene in Form eines Flachkabels mit einer Anzahl von nebeneinander angeordneten Leitungsadern zur Energie- und Datenübertragung, auf das ein aktiver kommunikationsfähiger Verbraucherabzweig mit verbraucherspezifischen Funktionalitäten mittels Durchdringungstechnik aufgesetzt wird.

Die Erfindung geht dabei von der Überlegung aus, daß der Projektierungsaufwand auch bei einer komplexen Anlageninstallation erheblich reduziert werden kann, wenn einerseits alle verbraucherspezifischen Funktionalitäten bereits im Abzweig integriert sind. Gleichzeitig kann eine erhebliche Zeiteinsparung während der Installation erzielt werden, wenn andererseits ein solcher integrierter kommunikationsfähiger und damit aktiver Verbraucherabzweig auf ein für unterschiedliche Anwendungsfälle geeignetes Sammelschienensystem aufgesetzt werden kann. Dazu eignen sich besonders Sammelschienen in Form von Flachkabeln, da diese flexibel sind und in verschiedenen Ausführungen für unterschiedliche Anwendungsfälle bereitgestellt werden können. Darüber hinaus eröffnet der Einsatz eines Flachkabels die Anwendung der besonders einfachen Kontaktierungsmöglichkeit für den Verbraucherabzweig in Form der Durchdringungstechnik.

In ein dazu für den Verbraucherabzweig vorgesehenes Gehäuse sind alle erforderlichen Funktionalitäten zur Verarbeitung von an den Verbraucher zu übertragende Signale sowie eine Kontaktierungseinrichtung zum Anschluß an das Flachkabel integriert. Daher ist das Flachkabel zweckmäßigerweise sowohl zur Energie- und Hilfsenergieübertragung als auch zur Übertragung von Kommunikationsdaten ausgelegt, indem entsprechende Gruppen von Leitungsadern innerhalb des Flachkabels nebeneinander angeordnet und von einem gemeinsamen Isolationsmantel umgeben sind.

In besonders zweckmäßiger Ausgestaltung ist das Gehäuse in ein Gehäuseoberteil und ein Gehäuseunterteil unterteilt. Während der Verbraucherabzweig vorteilhafterweise in das Gehäuseoberteil integriert ist, dient das Gehäuseunterteil als Führungshilfe für das Flachkabel und als Kontaktierungshilfe für das den Verbraucherabzweig repräsentierende Gehäuseoberteil. Dazu ist im Gehäuseunterteil eine vorzugsweise quer zum Flachkabel verlaufende Ausnehmung vorgesehen, die der Kontaktierungseinrichtung des Gehäuseoberteils gegenüberliegt. Dadurch wird beim Aufsetzen des Verbraucherabzweigs auf das Flachkabel bei gleichzeitig einfacher Handhabung eine sichere und zuverlässige Kontaktierung des Verbraucherabzweigs mit den im Flachkabel nebeneinander angeordneten Leitungsadern zur Energie- und Datenübertragung erzielt. Außerdem werden Anschlußfehler sicher vermieden.

Um das Flachkabel gegen Umwelteinflüsse abzudichten ist ein zusätzliches Dichtmittel, vorzugsweise in Form einer Flachdichtung, vorgesehen. Eine derartige, flexible Flachdichtung kann besonders raumsparend im Bereich des Kontaktraumes zwischen den Verbraucherabzweig und das Flachkabel eingelegt werden. Dadurch wird ein Schutzgrad bis zur Schutzart IP67 erzielt.

Die zur Realisierung der Druchdringungstechnik ausgestaltete Kontaktierungseinrichtung weist eine Anzahl von Kontaktierspießen auf, die zweckmäßigerweise innerhalb einer Kontaktierungsfläche diagonal nebeneinander angeordnet sind. Dadurch werden auf einfache Art und Weise die erforderlichen Spannungsabstände zwischen benachbarten Kontaktierspießen realisiert.

Der Verbraucherabzweig umfaßt in dessen Gehäuse die zur Versorgung des Verbrauchers notwendige Leistungselektronik und/oder Elektromechanik. Diese wiederum kann Schutzeinrichtungen gegen Überlast und Kurzschluß sowie Hilfsenergieschaltkreise und elektrische oder elektronische Baugruppen zur Datenverarbeitung inklusive programmierbarer Steuerfunktionen enthalten. Desweiteren können verschiedenartige Bedien- und/oder Anzeigeelemente sowie Melde- oder Sensoranschlüsse am Gehäuse des Verbraucherabzweigs vorgesehen sein.

Dazu weist der Verbraucherabzweig einen in dessen Gehäuse integrierten elektrischen Schaltkreis mit verbraucherspezifischen Funktionsgruppen, vorzugsweise in Form von integrierten Schaltkreisen, auf. Außerdem weist der Schaltkreis eine Anzahl von Anschlüssen für die Bedien- und Anzeigeelemente sowie für Verbindungselemente zur Dateneingabe und/oder Datenausgabe auf.

Durch einen derartigen modularen Aufbau des Verbraucherabzweigs können unterschiedliche Bestückungsvarianten erstellt werden. Der auf das Flachkabel aufgesetzte Verbraucherabzweig kann dann mittelbar über eine Verbindungsleitung mit dem Verbraucher, z.B. mit einem Heizelement, verbunden werden. Er kann aber auch unmittelbar mit dem Verbraucher, z.B. mit einem Motor, verbunden werden. Ein separater Klemmkasten am Motor kann dann entfallen.

Die mit der Erfindung erzielten Vorteile bestehen insbesondere darin, daß durch einen derartigen Aufbau eines Energieübertragungssystems mit nur zwei Hauptkomponenten in Form eines kommunikationsfähigen, aktiven Verbraucherabzweigs und eines Flachkabels ein an beliebiger Stelle innerhalb einer Anlage installierter Verbraucher in einfacher und zeitsparender Weise angeschlossenen werden kann. Da das Flachkabel im Gegensatz zu einem starren Sammelschienensystem flexibel ist, kann die Installation den Anlagenerfordernissen besonders einfach und zuverlässig angepaßt werden. Ein wesentlicher Vorteil ist die Vermeidung von Abisolierarbeiten zur Herstellung von Anschlußverbindungen, da der Verbraucherabzweig nur auf das Flachkabel aufzusetzen ist. Zur Energieversorgung und Steuerung des Verbrauchers kann dieser dann unmittelbar oder mittelbar über geeignete Anschlußmittel an den Verbraucherabzweig angeschlossen werden.

Dieses Konzept ermöglicht einen hohen Vorfertigungsgrad, da der integrierte kommunikationsfähige Verbraucherabzweig in unterschiedlichen Leistungklassen und in unterschiedlichen, an verschiedene technische Erfordernisse angepaßten Variationen bereitgestellt werden kann. Der Kontakt des verbraucher- und damit funktionsspezifisch ausgelegten Verbraucherabzweigs mit den verschiedenen Einzeladern im Flachkabel wird dabei in einfacher Weise hergestellt, indem das Gehäuseoberteil mit dem Gehäuseunterteil verschraubt wird, nachdem dort das Flachkabel eingelegt worden ist (Plug and Play).

Über die im Flachkabel integrierten Kommunikationsleitungen ist ein umfangreicher Datenaustausch mit einer an zentraler Stelle vorhandenen übergeordneten Steuerung, z.B. SIMATIC, in einfacher Art und Weise möglich. Dabei können bei Einsatz einer Anzahl von Verbraucherabzweigen diese vorteilhafterweise über das Flachkabel miteinander kommunizieren, so daß zusätzliche Verbindungen zwischen den Verbraucherabzweigen entfallen. Der Verbraucherabzweig selbst kann dabei für verschiedene Leistungen und für unterschiedliche Netzformen ausgelegt sein. Aufgrund der Modularität sind darüber hinaus ein dezentraler Aufbau von Anlagenfunktionen und eine einfache Anpassung an unterschiedliche Anlagenkonfigurationen möglich.

Nachfolgend werden Ausführungsbeispiele der Erfindung anhand einer Zeichnung näher erläutert. Darin zeigen:
- FIG 1: in perspektivischer Darstellung ein Energieverteilungssystem mit einem Flachkabel und mit einem Verbraucherabzweig,
- FIG 2: den Verbraucherabzweig gemäß FIG 1 mit vom Flachkabel abgeschwenktem Gehäuseoberteil,
- FIG 3: das Energieverteilungssystem gemäß FIG 1 mit teilweise aufgeschnittenem Verbraucherabzweig und Flachkabel in einer Explosionsdarstellung, und
- FIG 4: das Energieverteilungssystem gemäß FIG 1 mit auf einen Verbraucher aufgesetztem Verbraucherabzweig.

Einander entsprechende Teile sind in allen Figuren mit den gleichen Bezugszeichen versehen.

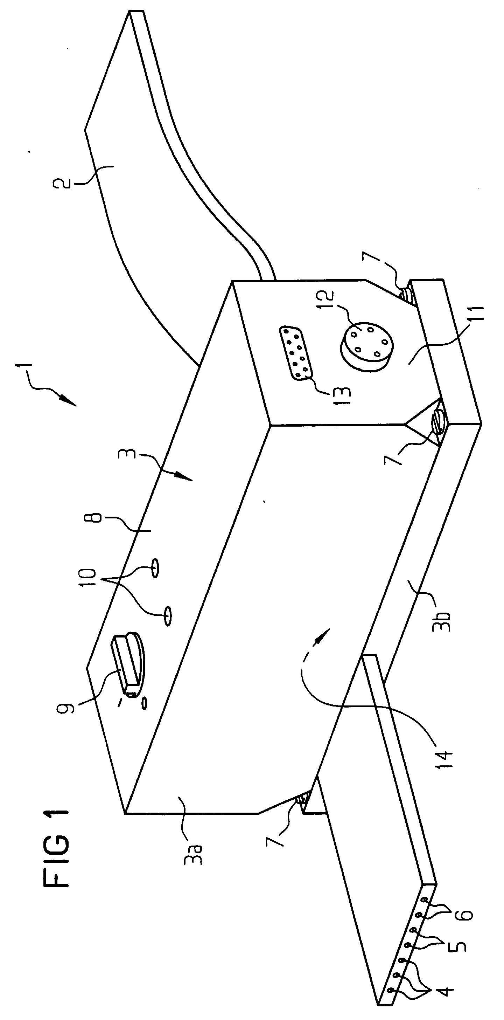

Das in FIG 1 dargestellte Energieverteilungssystem 1 umfaßt eine Sammelschiene in Form eines Flachkabels 2 und einen darauf aufgesetzten Verbraucherabzweig 3. Das bei dem dargestellten Energieverteilungssysstem 1 beispielsweise anwendbare Flachkabel 2 weist mehrere, nebeneinander angeordnete Leitungs- oder Einzeladern auf, von denen eine erste Gruppe von Leitungsadern 4 als Energieleitungen und eine zweite Gruppe von Leitungsadern 5 als Hilfsenergieleitungen sowie eine dritte Gruppe von Leitungsadern 6 als Kommunikations- oder Datenleitungen 6 ausgelegt sind. Die Leitungsadern 4,5 und 6 weisen die für die Verwendung jeweils erforderlichen Querschnitte auf.

Der Verbraucherabzweig 3 ist aus einem Gehäuseoberteil 3a und einem Gehäuseunterteil 3b aufgebaut, die mittels an den Ecken des Gehäuses 3a,3b vorgesehenen Schrauben 7 miteinander verschraubt werden können. Auf der Gehäuseoberseite 8 des Verbraucherabzweigs 3 sind ein Bedienelement 9 in Form eines Schalters und Anzeigeelemente 10 in Form von Leuchtdioden (LED) vorgesehen. In einer Gehäuseseitenwand 11 des Verbraucherabzweigs 3 sind Anschlußelemente in Form einer Anschlußbuchse 12 zum Anschluß eines Steckerkontaktes für einen Verbraucheranschluß sowie eines Anschlußfeldes 13 mit Ein- und Ausgabekanälen vorgesehen.

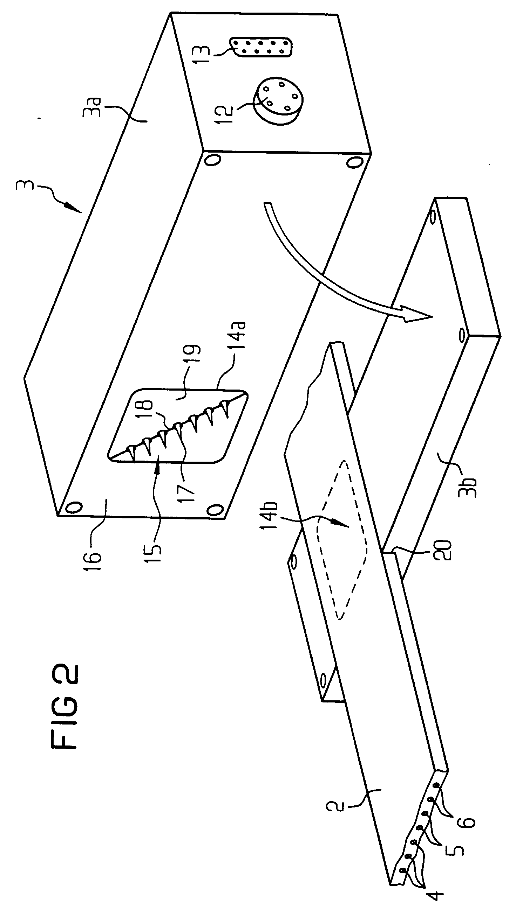

In FIG 2 ist eine zur Kontaktierung des Verbraucherabzweigs 3 mit dem Flachkabel 2 vorgesehene Kontaktierungseinrichtung im Kontaktierungsbereich 14 bei aufgeklapptem Gehäuseoberteil 3a des Verbraucherabzweigs 3 sichtbar dargestellt. Die Kontaktierungseinrichtung 15 ist auf der Gehäuseunterseite 16 des Gehäuseoberteils 3a angeordnet und umfaßt eine Anzahl von Kontaktier- oder Durchdringungsspießen 17. Diese sind auf einer Diagonalen 18 der im Ausführungsbeispiel annähernd quadratischen Kontaktfläche 14a des Gehäuseoberteils 3a nebeneinander angeordnet.

Die Abmessungen der Kontaktfläche 14a entsprechen denen einer korrespondierenden Kontaktebene 14b des Gehäuseunterteils 3b und sind der jeweiligen Breite des Flachkabels 2 einerseits und der Breite des Verbraucherabzweigs 3 andererseits angepaßt. Beim Aufsetzen des Gehäuseoberteils 3a des Verbraucherabzweigs 3 auf das Gehäuseunterteil 3b deckt die Kontaktfläche 14a das Flachkabel 2 im Bereich der Kontaktebene 14b ab. Dabei durchdringen die Kontaktierspieße 17 den Mantel und die Aderisolierung des flexiblen Flachkabels 2, so daß der Kontakt mit den entsprechenden Einzeladern 4,5,6 hergestellt wird. Eine die gesamte Kontaktfläche 14a abdeckende Flachdichtung 19 dient zum Abdichten des Kontaktierungsbereichs 14.

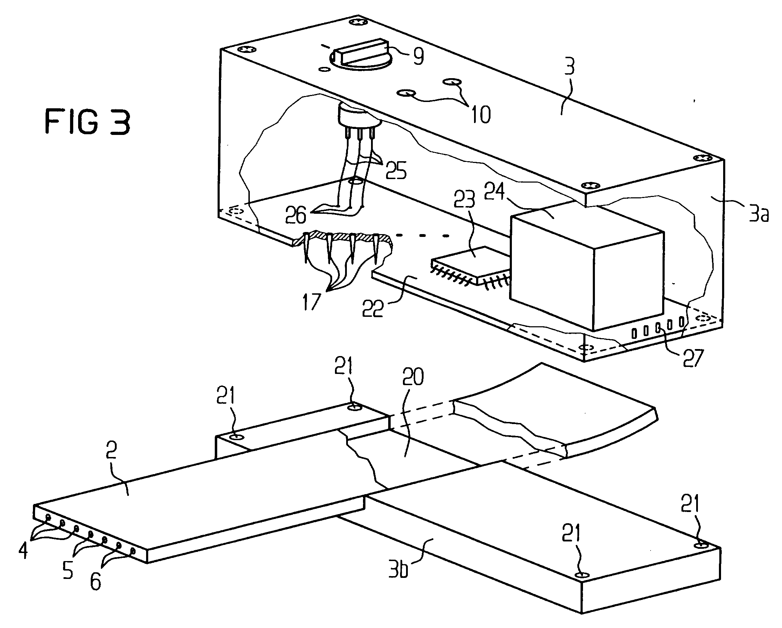

Als Führungshilfe für das Flachkabel 2 sowie als Kontaktierhilfe ist im Bereich der Kontaktebene 14b im Gehäuseunterteil 3b eine Ausnehmung 20 (FIG 3) zur Aufnahme des Flachkabels 2 vorgesehen, deren Tiefe der Dicke des Flachkabels 2 entspricht. Gewindebohrungen 21 an den Ecken des Gehäuseunterteils 3b dienen zur Aufnahme der Schrauben 7 und somit gleichzeitig ebenfalls als Führungshilfe.

Der Verbraucherabzweig 3 ist als aktiver Abzweig ausgeführt, indem die zur Versorgung und Ansteuerung eines diesem Verbraucherabzweig 3 zugeordneten Verbrauchers erforderlichen Funktionalitäten in den Verbraucherabzweig integriert sind. Dazu ist innerhalb des Gehäuseoberteils 3a des Verbraucherabzweigs 3 ein elektrischer Schaltkreis mit Funktionsbaugruppen in Form einer Leiterplatte 22 mit beispielhaft einem integrierten Schaltkreis 23 und einem Leistungsteil 24 vorgesehen. Der Schalter 9 ist über gehäuseinterne Verbindungsleitungen 25 an entsprechende Anschlüsse 26 der Leiterplatte 22 angeschlossen. Ebenso sind die Anzeigeelemente 10 in nicht näher dargestellter Art und Weise gehäuseintern an die Leiterplatte 22 angeschlossen und damit mit dem elektrischen Schaltkreis verbunden. Eine ebenfalls entsprechend der jeweiligen Verdrahtung des Schaltkreises auf der Leiterplatte 22 vorgesehene Anschluß- oder Stiftleiste 27 dient zum gehäuseinternen Anschluß der in FIG 3 nicht sichtbaren Anschlußbuchse 12 und des Anschlußfeldes 13.

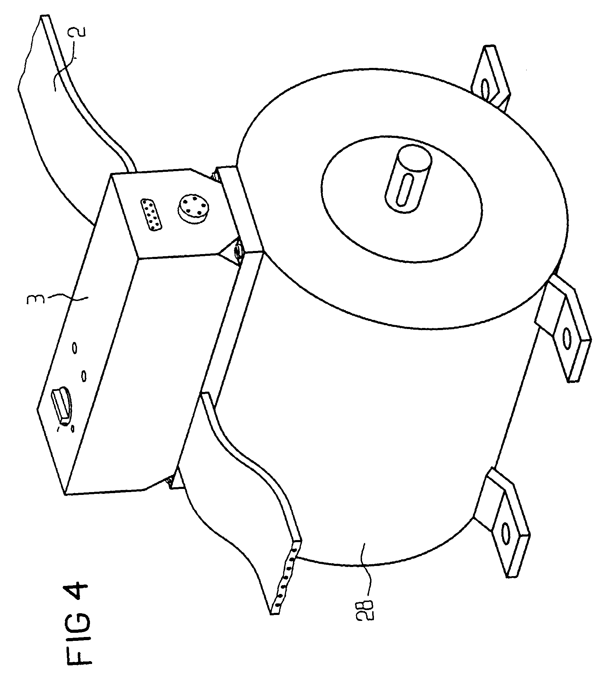

FIG 4 zeigt eine bevorzugte Installationsvariante, bei der der mit dem Flachkabel 2 kontaktierte Verbraucherabzweig 3 auf einen Motor 28 als Verbraucher aufgesetzt ist. Der Verbraucherabzweig 3 kann somit in einfacher und zeitsparender Weise direkt mit dem Verbraucher verbunden werden. Alternativ kann der Verbaucherabzweig 3 auch an einer anderen Stelle plaziert werden, wobei dann der Verbraucher über (nicht dargestellte) Anschlußverbindungen mittels Steckkontakt an die in FIG 4 nicht dargestellte Anschlußbuchse 12 und das Anschlußfeld 13 des Verbraucherabzweigs 3 angeschlossen wird.

## Patentansprüche

1. Energieverteilungssystem mit einer Sammelschiene und mit mindestens einem Abzweig zur Versorgung eines Verbrauchers (28), wobei die Sammelschiene als Flachkabel (2) mit einer Anzahl von nebeneinander angeordneten Leitungsadern (4,5,6) zur Energie- und Datenübertragung ausgeführt ist, und wobei der Abzweig als kommunikationsfähiger Verbraucherabzweig (3) in ein Gehäuse (3a) integriert ist, das verbraucherspezifische Funktionalitäten enthält und eine nach dem Prinzip der Durchdringungstechnik arbeitende Kontaktierungseinrichtung (15,17) aufweist.

2. Energieverteilungssystem nach Anspruch 1, **dadurch gekennzeichnet**, daß das Flachkabel (2) eine erste Gruppe von Leitungsadern (4) zur Energieübertragung und eine zweite Gruppe von Leitungsadern (5) zur Hilfsenergieübertragung sowie eine dritte Gruppe von Leitungsadern (6) zur Übertragung von Kommunikationsdaten enthält.

3. Energieverteilungssystem nach Anspruch 1 oder 2, **dadurch gekennzeichnet**, daß die Kontaktierungseinrichtung (15,17) in ein Gehäuseoberteil (3a) integriert ist, das auf ein eine Ausnehmung (20) für das Flachkabel (2) aufweisendes Gehäuseunterteil (3b) aufsetzbar ist.

4. Energieverteilungssystem nach Anspruch 3, **dadurch gekennzeichnet**, daß das Gehäuseoberteil (3a) mittels Schrauben (7) auf dem Gehäuseunterteil (3b) fixierbar ist.

5. Energieverteilungssystem nach einem der Ansprüche 1 bis 4, **gekennzeichnet durch** eine zwischen den Verbraucherabzweig (3) und das Flachkabel (2) einlegbare flexible Flachdichtung (19).

6. Energieverteilungssystem nach einem der Ansprüche 1 bis 5, **dadurch gekennzeichnet**, daß die Kontaktierungseinrichtung (15) eine Anzahl von Kontaktierspießen (17) aufweist, die innerhalb einer Kontaktierungsfläche (14a) des Verbraucherabzweigs (3) diagonal nebeneinander angeordneten sind.

7. Energieverteilungssystem nach einem der Ansprüche 1 bis 6, **dadurch gekennzeichnet**, daß der Verbraucherabzweig (3) einen in dessen Gehäuse (3a) integrierten elektrischen Schaltkreis mit verbraucherspezifischen Funktionsbaugruppen (22,23,24) aufweist.

8. Energieverteilungssystem nach Anspruch 7, **dadurch gekennzeichnet**, daß der Schaltkreis eine Leiterplatte (22) mit einem Leistungsteil (24) und mit einem integrierten Schaltkreis (23) sowie mit einer Anschlußleiste (27) für mindestens ein am Verbraucherabzweig (3) vorgesehenes Anschlußelement (12,13) aufweist.

9. Energieverteilungssystem nach Anspruch 8, **dadurch gekennzeichnet**, daß die Leiterplatte (22) eine Anzahl von Anschlüssen (26) für ein am Gehäuse (3a) vorgesehenes Bedienelement (9) und/oder Anzeigeelement (10) aufweist.

10. Energieverteilungssystem nach einem der Ansprüche 1 bis 9 **dadurch gekennzeichnet**, daß der Verbraucherabzweig (3) unmittelbar mit dem Verbraucher (28) verbunden ist.
